# EUROPEAN PATENT APPLICATION

(11) **EP 4 421 367 A1**
(43) Date of publication of application: **28.08.2024**
(21) Application number: 22883429.7
(22) Date of filing: 12.10.2022
(51) Int. Cl.: F16K 31/04, F25B 41/20

(54) **ELECTRIC VALVE**

(30) Priority: 20.10.2021 JP 2021171285
(71) Applicant: Fujikoki Corporation, Tokyo 158-0082 (JP)
(72) Inventor: MATSUBARA, Yuta, Tokyo 158-0082 (JP); YOSHIDA, Tatsuya, Tokyo 158-0082 (JP); ARAI, Yusuke, Tokyo 158-0082 (JP)
(74) Representative: Ter Meer Steinmeister & Partner
(86) International application number: PCT/JP2022/037995
(87) International publication number: WO 2023/068125

(57) **Abstract**

An electrically operated valve (11) is provided with a vale main body (12) having a valve chamber (13) which is communicated with an inflow passage (15) introducing a refrigerant and an outflow passage (16) discharging the refrigerant, a valve body (17) changing a flow rate of the refrigerant by advancing and retreating with respect to a valve seat (14) between a valve-closed state in which the valve body is seated on the valve seat formed within the valve chamber and a valve-opened state in which the valve body is spaced apart from the valve seat, and an electric motor (45) which drives the valve body, in which the electric motor has a stator (46) which includes a coil (49) generating a magnetic force due to an electric current application, and a magnetic rotor (36) which is arranged in an inner side of the stator and rotates due to the magnetic force generated by the coil, and the electrically operated valve further comprises a magnetic sensor (62) which detects the magnetic force of the magnet rotor, wherein a magnetic shield member (for example, made of a soft magnetic material) 61 is disposed in such a manner as to be interposed between the magnetic sensor and the coil.

## Description

### TECHNICAL FIELD

The present invention relates to an electrically operated valve, and more particularly to an electrically operated valve including a magnetic sensor which detects a rotation of a magnet rotor.

### BACKGROUND ART

An electrically operated valve controlling an opening degree of a valve with the use of an electric motor such as a stepping motor has been conventionally used for a refrigeration cycle apparatus which is provided with a refrigerant circuit of an air conditioning machine and a refrigeration/freezing apparatus.

Further, as the electrically operated valve mentioned above, there is a structure which is provided with a magnetic sensor detecting an angle of rotation and a direction of rotation of a magnet rotor (hereinafter, also refer simply to as "rotor"), and accurately detects an opening degree of the valve to allow a high-precision control (for example, refer to the following patent literature 1).

### CITATION LIST

### PATENT LITERATURE

Patent Literature 1: Japanese Unexamined Patent Publication No. 2021-110409

### SUMMARY OF INVENTION

In the meantime, the magnetic sensor detecting a magnetism of the magnet rotor is preferably arranged as close to the rotor as possible in view of a detection accuracy.

However, when a coil arranged close to the rotor is excited by energization, a magnetic force generated in the coil saturates and leaks to the periphery from the stator in some stator material, some number of coil turns or some supplied current value, and a magnetic flux density around the coil may become high. Therefore, in a case where the magnetic sensor is arranged near the coil, the magnetic sensor may be affected by a leakage magnetic flux leaking from the coil, thereby causing an erroneous detection.

On the contrary, the invention described in the patent literature 1 mentioned above is adapted to allow the magnetism of the rotor to be detected by the magnetic sensor which is accommodated in a case arranged at a position away from the rotor (accordingly from the coil), on the basis of the provision of a magnetic transmission member which transmits the magnetism of the rotor.

However, two magnetic transmission members are required to be independently provided in the invention described in the patent literature mentioned above, and each of the magnetic transmission members extends to a close position to the rotor while passing directly above the coil. Thus, it is impossible to remove the possibility of being affected by the leakage magnetic flux from the coil via the magnetic transmission member.

Further, the problem mentioned above, that is, a point regarding the possibility that the leakage magnetic flux from the coil affects the magnetic sensor in the electrically operated valve has not been proposed by the prior art including the patent literature 1 mentioned above.

Therefore, an object of the present invention is to newly propose the problem mentioned above and achieve the problem, and exists in a point of preventing the magnetic sensor from being affected by the leakage magnetic flux from the coil and preventing the erroneous detection from being generated.

In order to solve the problem mentioned above and achieve the object, an electrically operated valve according to the present invention comprises a vale main body having a valve chamber which is communicated with an inflow passage introducing a refrigerant and an outflow passage discharging the refrigerant, a valve body changing a flow rate of the refrigerant by advancing and retreating with respect to a valve seat formed within the valve chamber between a valve-closed state in which the valve body is seated on the valve seat and a valve-opened state in which the valve body is spaced apart from the valve seat, an electric motor which drives the valve body, in which the electric motor has a stator which includes a coil generating a magnetic force due to an electric current application, and a magnetic rotor which is arranged in an inner side of the stator and rotates due to the magnetic force generated by the coil, and the electrically operated valve further includes a magnetic sensor which detects the magnetic force of the magnet rotor, wherein a magnetic shield member is disposed in such a manner as to be interposed between the magnetic sensor and the coil.

In the electrically operated valve according to the present invention, the magnetic shield member is provided in such a manner as to be interposed between the magnetic sensor and the coil. Therefore, it is possible to inhibit or suppress the leakage magnetic flux from reaching the magnetic sensor from the coil, and it is possible to prevent the erroneous detection from being generated in the magnetic sensor.

The kind of a material constructing the magnetic shield member is not particularly limited as long as the material has a magnetic shielding effect. However, the magnetic shield member is preferably formed by a member made of a magnetic material, in particular, a soft magnetic material having a high magnetic permeability. This is because the leakage magnetic flux is concentrated into the magnetic shield member (is passed into the magnetic shield member) even if the leakage magnetic flux is generated in the coil, thereby preventing the leakage magnetic flux from reaching the magnetic sensor.

Further, in the electrically operated valve, the magnetic rotor may be arranged so as to pass through the stator, and may be provided with a protruding portion which protrudes outward from at least one end surface among both end surfaces of the stator in an axial direction, and the magnetic sensor may be arranged so as to be spaced at a fixed distance from one end surface of the stator and face to the protruding portion in a radial direction of the magnet rotor.

In the aspect as mentioned above, the magnetism of the rotor is detected by the magnetic sensor which is arranged so as to face to the protruding portion of the rotor, and the magnetic shield member is disposed between the coil and the magnetic sensor according to the present invention. Therefore, even if the protruding portion is made short (the magnetic sensor arranged so as to face to the protruding portion comes close to the coil by making the protruding portion short), the magnetic sensor is hard to be affected by the coil. Thus, it is possible to reduce a manufacturing cost of the electrically operated valve (the rotor) by shortening the rotor (forming the rotor to have a low profile), and it is also possible to make the electrically operated valve compact (forming the electrically operated valve to have a low profile).

Further, in the aspect mentioned above, the stator may have a ring-like planar shape having a center hole which allows the magnetic rotor to pass through, and the magnetic shield member may be formed as a flat plate member which covers an upper end surface and has a ring-like planar shape, the upper end surface being the one end surface of the stator.

According to such the aspect in which the upper end surface of the stator is covered with the magnetic shield member, it is possible to securely shut off the leakage magnetic flux from the coil, and it is possible to protect the magnetic sensor from the leakage magnetic flux. The term "ring-like planar shape" mentioned above does not necessarily mean that an outer shape (an outer periphery) and a shape of the center hole are circular, but is a concept including an oval shape and a polygonal shape, for example, in addition to an example that any one or both of the outer shape and the center hole is circular shape.

Further, in the aspect mentioned above, it is preferable to employ a structure in which the magnetic shield member is fixed by a resin forming portion covering the coil. This is because of suppressing the man-hour when manufacturing the electrically operated valve and the number of parts minimum, and reducing the manufacturing cost.

More specifically, in a case where the magnetic shield member is provided as a sub assembly, there are required a step of producing the sub assembly, and a step of assembling it in the electrically operated valve, in addition to a molding step of the coil, so that the man-hour when manufacturing is increased. Further, in a case where the magnetic shield member is assembled in the stator by a fixing method, for example, welding, fastening (screw clamping) or fixing metal fitting, a working step such as the welding is newly required, and a mechanism for positioning the magnetic shield member when working is required.

On the contrary, the aspect mentioned above that the magnetic shield member is fixed by the resin forming portion covering the coil, the magnetic shield member can be assembled only by insert molding the magnetic shield member as an insert part together with the coil, that is, additionally putting the magnetic shield member in when forming the resin layer covering the coil. As a result, it is possible to assemble the magnetic shield member in the electrically operated valve without increasing the man-hour. Further, according to the fixing structure mentioned above, it is not necessary to add any part for fixing the magnetic shield member, and it is possible to suppress the number of additional parts to a minimum number of parts (only the magnetic shield member).

Further, in the molding step of the coil, the coil may be installed within a metal mold by inserting a core pin (a columnar jig) into a center hole of the coil (the stator). In this case, the magnetic shield member can be positioned only by being inserted into the core pin together with the coil, as long as a diameter of the center hole of the ring-shaped magnetic shield member is the same (or approximately the same) as the diameter of the center hole of the stator. Thus, the positioning mechanism for assembling the magnetic shield member is not required.

Further, according to the aspect mentioned above that the magnetic shield member is fixed by the molding resin having the fluidity when molding, the resin flows and solidifies in response to a changed shape even in a case where a shape change (for example, a change in an outer diameter or a thickness) of the magnetic shield member is required. Therefore, it is possible to assemble the magnetic shield member which is changed its shape, without changing a step and a fixing structure.

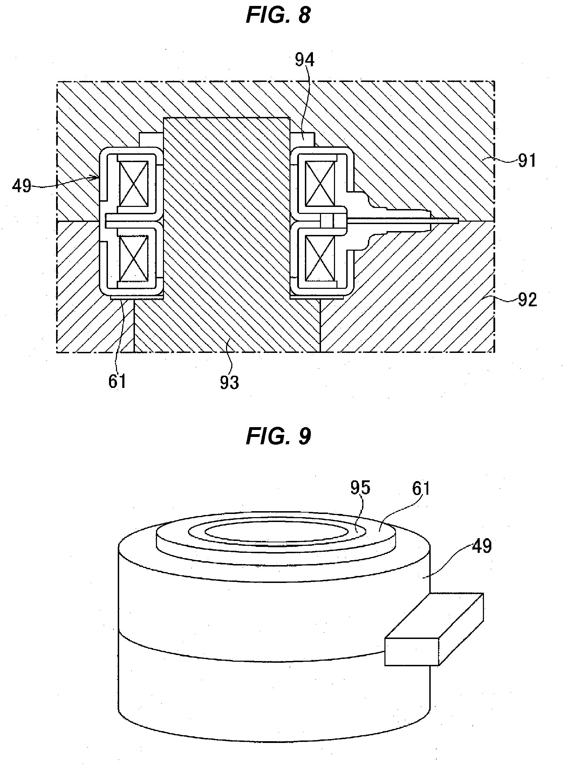

The description "cover a coil" mentioned above about the resin forming portion does not mean only covering an outer side (an outer peripheral surface, a top surface and a bottom surface), but is a concept including covering an inner side (an inner peripheral surface). For example, in an embodiment mentioned later, an inner molding step of covering an inner side (a winding wire) of the coil with the resin is performed, an outer molding step of covering an outer side of the coil is thereafter executed, and the magnetic shield member is fixed in the outer molding step (by a mold cover formed in the outer molding step). However, as mentioned with reference to Figs. 8 and 9, the magnetic shield member can be fixed by a resin forming portion which is formed in the inner molding step.

According to the electrically operated valve of the present invention, it is possible to prevent the magnetic sensor from being affected by the leakage magnetic flux from the coil and prevent the erroneous detection from being generated.

The other objects, features and advantages of the present invention are apparent from the following description of embodiments according to the present invention which is given on the basis of the accompanying drawings. In each of the drawings, same reference numerals denote the same or corresponding portions.

### BRIEF DESCRIPTION OF DRAWINGS

Fig. 1 is a vertical cross-sectional view showing a valve-closed state of an electrically operated valve according to a first embodiment of the present invention.
Fig. 2 is a vertical cross-sectional view showing a valve-opened state of the electrically operated valve according to the first embodiment.
Fig. 3 is a partly notched perspective view showing a main part (a relationship among a magnetic sensor, a magnet rotor, a coil and a magnetic shield member) of the electrically operated valve according to the first embodiment.
Fig. 4 is a plan view showing the main part (the relationship among the magnetic sensor, the magnet rotor, the coil and the magnetic shield member) of the electrically operated valve according to the first embodiment.
Fig. 5 is a side elevational view showing the main part (the relationship among the magnetic sensor, the magnet rotor, the coil and the magnetic shield member) of the electrically operated valve according to the first embodiment.
Fig. 6 is a cross-sectional view showing a step of manufacturing the electrically operated valve according to the first embodiment (an outer molding step of a coil/a step of fixing a magnetic shield member according to an insert molding).
Fig. 7 is a perspective view schematically showing the outer molding step of the coil (the step of fixing the magnetic shield member according to the insert molding).
Fig. 8 is a cross-sectional view showing a method of fixing the magnetic shield member according to the inner molding step of the coil.
Fig. 9 is a perspective view schematically showing the coil to which the magnetic shield member is fixed according to the inner molding step.
Fig. 10 is a view showing a magnetic flux of the coil in a case where the magnetic shield member is not provided in the electrically operated valve according to the first embodiment.
Fig. 11 is a view showing the magnetic flux of the coil in the electrically operated valve according to the first embodiment (in a case where the magnetic shield member is provided).
Fig. 12 is a side elevational view showing the other arrangement example of the magnetic shield member of the electrically operated valve according to the first embodiment.
Fig. 13 is a plan view showing the other example of the magnetic shield member of the electrically operated valve according to the first embodiment.
Fig. 14 is a plan view showing further the other example of the magnetic shield member of the electrically operated valve according to the first embodiment.
Fig. 15 is a vertical cross-sectional view showing a configuration example for obtaining the same effect as the electrically operated valve according to the first embodiment which is provided with the magnetic shield member.
Fig. 16 is a vertical cross-sectional view showing a valve-closed state of an electrically operated valve according to a second embodiment of the present invention.
Fig. 17 is a vertical cross-sectional view showing a valve-opened state of the electrically operated valve according to the second embodiment.

### DESCRIPTION OF EMBODIMENTS

### [First Embodiment]

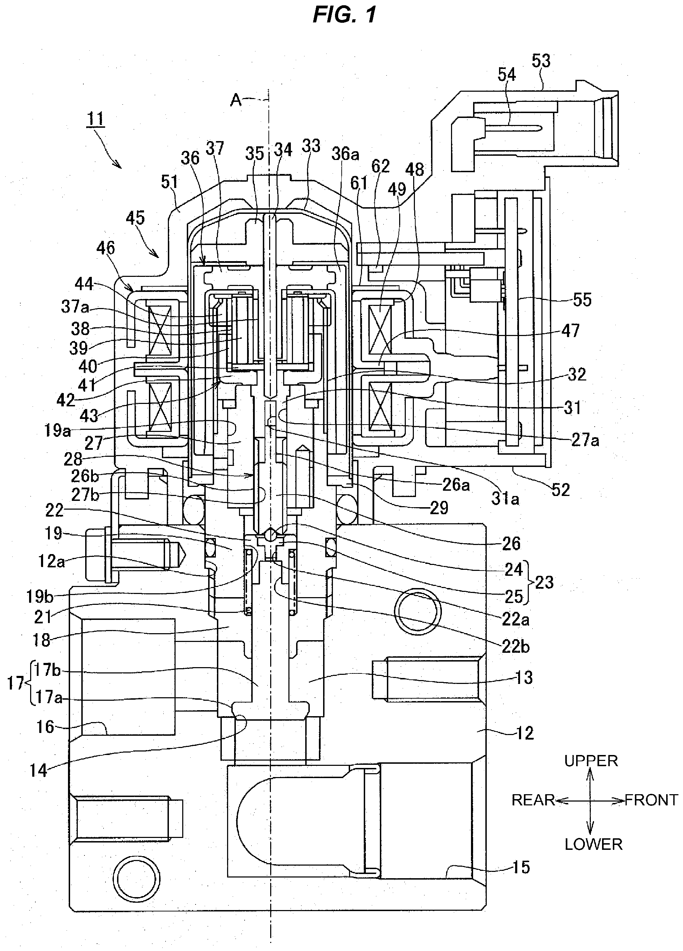

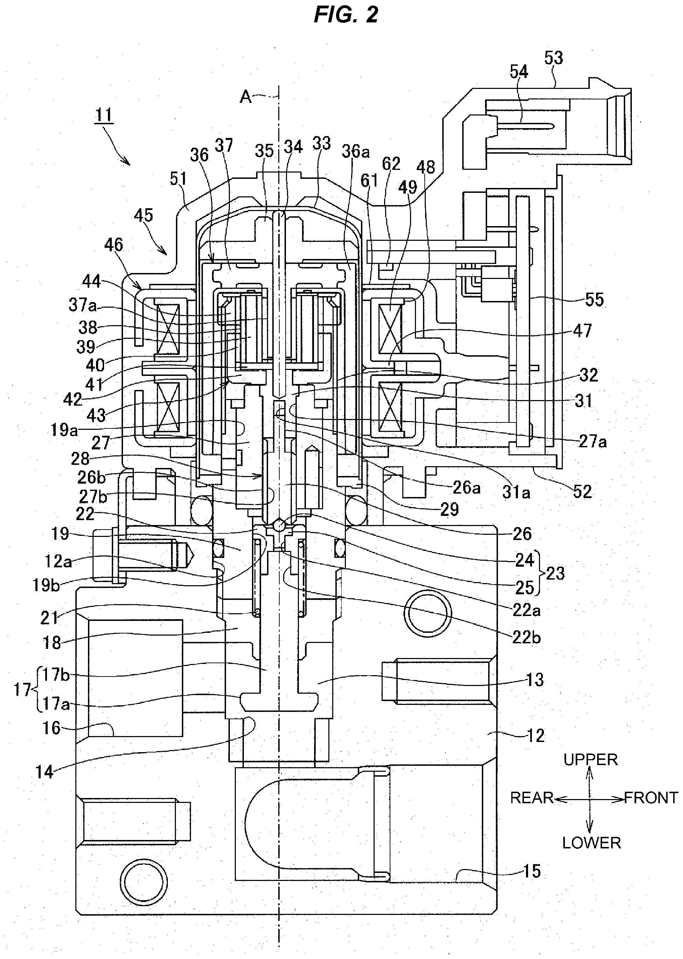

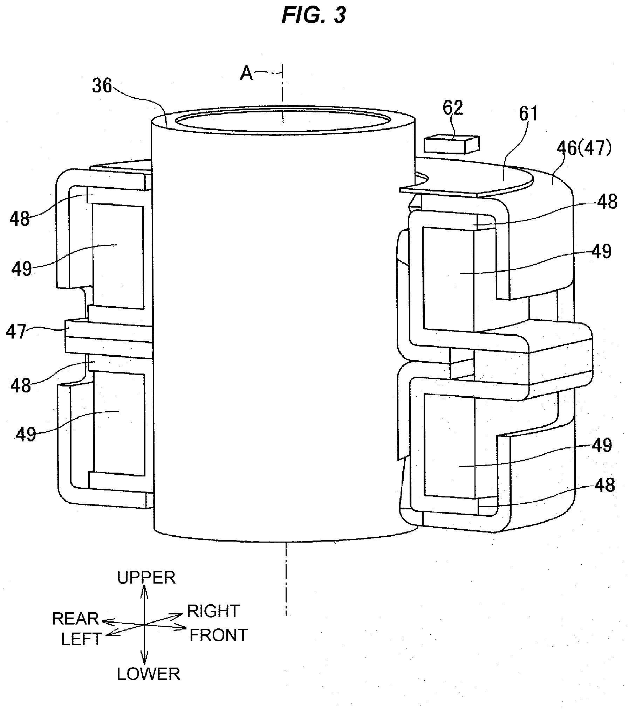

As shown in Figs. 1 to 5, an electrically operated valve 11 according to a first embodiment of the present invention is an electrically operated valve which is preferably used for regulating a flow rate of a refrigerant, for example, in a refrigeration cycle apparatus such as an air conditioning machine. The electrically operated valve 11 is provided with a valve main body 12 which has a valve chamber 13 in an internal portion and also has an inflow passage 15 allowing the refrigerant to flow into the valve chamber 13 and an outflow passage 16 allowing the refrigerant to flow out of the valve chamber 13, a valve seat 14 which is formed in an opening portion of the inflow passage 15 for the valve chamber 13, a valve body 17 which changes a passing quantity (a flow rate) of the refrigerant by advancing and retreating (moving upward and downward) with respect to the valve seat 14 between a valve-closed state (refer to Fig. 1) in which the valve body 17 comes into contact with the valve seat 14 and a valve-opened state (refer to Fig. 2) in which the valve body 17 is spaced apart from the valve seat 14, an electric motor 45 which drives the valve body 17, a speed reduction mechanism (a paradox planetary gear speed reduction mechanism) 43 which decelerates a rotation of the electric motor 45, a transmission mechanism (a screw feeding mechanism) 28 which converts the decelerated rotating motion into a linear motion and transmits to the valve body 17, a connection member 19 which connects the electric motor 45 to the valve main body 12, a can (a sealed container) 33 which covers an upper opening 12a of the valve main body 12 communicating with the valve chamber 13 and forms a sealed space together with the connection member 19, a magnetic sensor 62 which detects the rotation of the electric motor 45, and a connector 53 which achieves an electric connection with the external portion.

Each of the drawings appropriately shows two-dimensional coordinates or three-dimensional coordinates which represent a longitudinal direction, a horizontal direction and a vertical direction and are orthogonal to each other, and the following description will be given on the basis of these directions.

The electric motor 45 is constructed by a stepping motor including a stator 46 which is arranged in an outer side of the can 33, and a magnet rotor 36 which is arranged in an inner side of the can 33 so as to be rotatable. The magnet rotor 36 protrudes upward from an upper surface of the stator 46, and a magnetic sensor 62 is arranged in an upper surface portion of the stator 46 in such a manner as to face to the protruding portion of the rotor 36 with sandwiching a side wall of the can 33. This is for the reason of securely detecting the rotation of the rotor 36 with the magnetic sensor 62. The magnetic sensor 62 is constructed by a Hall IC which includes a Hall element and an amplifier, and outputs a signal corresponding to a direction and a magnitude of a magnetic flux (a magnetic flux density) which passes through a magnetically sensitive surface.

Further, in the electrically operated valve 11 according to the present embodiment, a magnetic shield member 61 is disposed in an upper surface of the stator 46 in such a manner as to be interposed between the magnetic sensor 62 and the stator 46. The magnetic shield member 61 is a plate-like member which has a ring-like planar shape in such a manner as to cover an upper surface of the ring-shaped stator 46 (planar shapes of an outer periphery and a center hole both have a perfect circular shape, in a case of the present embodiment). Further, the magnetic shield member 61 is formed by a high magnetic permeability material, such as a permalloy (an iron-nickel soft magnetic material) in the present embodiment, in such a manner as to collect the leakage magnetic flux from the coil 49 within the stator 46.

The number of the magnetic sensor 62 is not limited to one, but a plurality of magnetic sensors 62 may be provided, for example, for allowing the direction of rotation of the rotor 36 to be detectable. In a case of such an aspect, the magnetic shield member 61 may be disposed in such a manner as to be interposed between a plurality of magnetic sensors 62 and the stator 46.

The connection member 19 is a tubular member having a large-diameter hole 19a and a small-diameter hole 19b which form a through hole communicating with each other. The large-diameter hole 19a passes through a center portion of an upper portion of the connection member 19, and has a large diameter in such a manner as to allow a bearing member 27 mentioned later to be fitted and inserted from the above. The small-diameter hole 19b passes through a center portion of a lower portion of the connection member 19 and has a small diameter. Further, a cylindrical can 33 which is covered and not bottomed (is opened in a bottom surface and is closed in a top surface) is bonded to an outer peripheral surface of an upper end portion of the connection member 19 via a ring-like base plate 29.

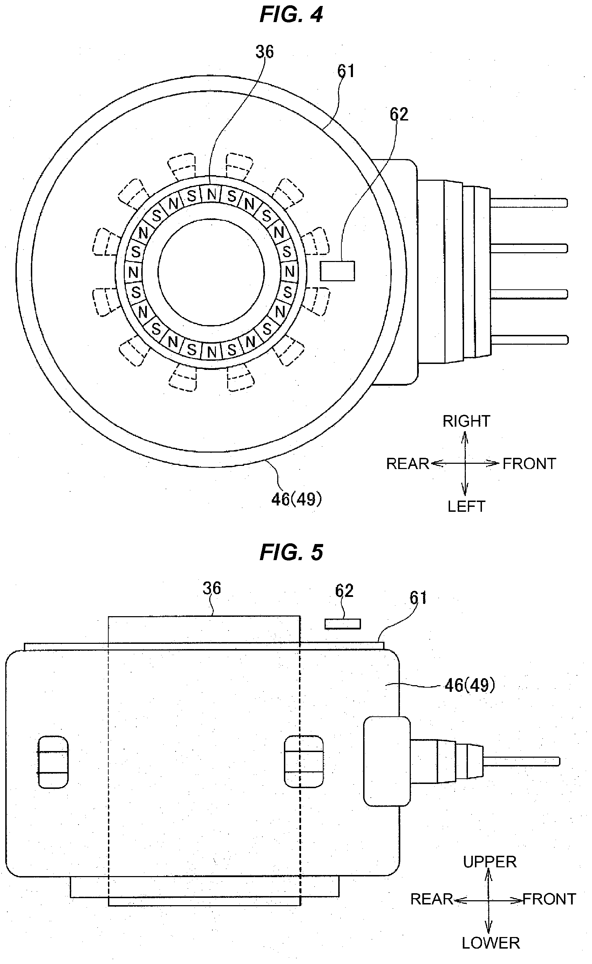

The stator 46 arranged in an outer side of the can 33 includes a yoke (a stator yoke) 47, a bobbin 48, a coil 49, and a resin mold cover 51. Further, the rotor 36 arranged in an inner side of the can 33 is constructed by integrally connecting a cylindrical rotor member 36a which is produced by a magnetic material (a permanent magnet), and a sun gear member 37 which is produced by a resin material. The rotor 36 is provided in such a manner that a plurality of north poles and a plurality of south poles are alternately lined up in a peripheral direction on an outer peripheral surface of the rotor 36, the north poles and the south poles extending in a direction of an axis of rotation of the rotor 36 (coinciding a central axis line A of the electrically operated valve 11) (refer to Fig. 4).

A shaft 34 is inserted into a center portion of the sun gear member 37, and an upper portion of the shaft 34 is supported by a support member 35 which is arranged in an inner side of a top portion of the can 33.

A sun gear 37a of the sun gear member 37 engages with a plurality of planetary gears 38 rotatably supported to a shaft 39 which is disposed in a carrier 41 mounted on a bottom surface of an output gear 42. An upper portion of the planetary gear 38 engages with an annular ring gear (an internal fixed gear) 44 attached to an upper portion of the cylindrical member 32 which is fixed to the upper portion of the connection member 19, and a lower portion of the planetary gear 38 engages with an internal tooth gear 40 of the annular output gear 42. The number of teeth of the ring gear 44 is set to be slightly different from the number of teeth of the internal tooth gear 40 of the output gear 42. Thus, the number of rotation of the sun gear 37a is decelerated with a great deceleration ratio and is transmitted to the output gear 42. The gear mechanisms (the sun gear 37a, the planetary gear 38, the ring gear 44 and the output gear 42) construct the speed reduction mechanism (the paradox planetary gear speed reduction mechanism) 43 which decelerates the rotation of the stepping motor 45 mentioned above.

A tubular bearing member 27 is fitted and inserted into the large-diameter hole 19a in the upper portion of the connection member 19, and is fixed thereto by caulking. The output gear 42 is slidably in contact with an upper surface of the bearing member 27. Further, an upper portion of a stepped cylindrical output shaft 31 is pressed into the center of a bottom portion of the output gear 42, and a lower portion of the output shaft 31 is rotatably inserted into an insertion hole 27a which is formed in a center portion of an upper surface of the bearing member 27. Further, a lower end portion of the shaft 34 is rotatably fitted to the upper portion of the output shaft 31.

A female screw portion 27b is formed in a lower portion of the center portion of the bearing member 27, and a male screw portion 26b formed on an outer peripheral surface of the screw drive member 26 threadably engages with the female screw portion 27b. The bearing member 27 (the female screw portion 27b) and the screw drive member 26 (the male screw portion 26b) construct the transmission mechanism which converts the rotating motion supplied from the stepping motor 45 via the screw feeding mechanism 28 mentioned above, that is, the speed reduction mechanism 43 into the linear motion in the vertical direction and transmits to the valve body 17.

Here, the output gear 42 performs a rotating motion at a fixed position in the vertical direction without moving up and down, and the rotating motion of the output gear 42 is transmitted to the screw drive member 26 side by inserting a plate-like portion 26a which is disposed in an upper end portion of the screw drive member 26 and has a flat driver shape into a fitting groove 31a which is disposed in a lower end portion of the output shaft 31 connected to the output gear 42 and has a slit shape. The plate-like portion 26a disposed in the screw drive member 26 slides in the vertical direction within the fitting groove 31a of the output shaft 31, so that the output gear 42 (the rotor 26) rotates. Thus, the screw drive member 26 linearly moves in the vertical direction by the screw feeding mechanism 28 in spite of no motion of the output gear 42 in the vertical direction.

The linear motion of the screw drive member 26 is transmitted to the valve body 17 via a ball-like joint 23 which is constructed by a ball 24 and a ball receiving seat 25, and an upper spring receiving member 22. The valve body 17 is constructed by a valve body main body portion 17a which contacts with and separates from the valve seat 14, a valve body support portion 17b which rises upward from a center portion of an upper surface of the valve body main body portion 17a and has a stepped columnar shape. The upper spring receiving member 22 and the valve body 17 (the valve body support portion 17b) are connected by fitting and inserting an upper end portion of the valve body support portion 17b into a fitting hole (a lower surface fitting hole) 22b which is formed in a center portion of a lower surface of the upper spring receiving member 22. Further, a fitting hole (an upper surface fitting hole) 22a is disposed in a center portion of an upper surface of the upper spring receiving member 22, and the ball receiving seat 25 is fitted to the upper surface fitting hole 22a. Further, the upper spring receiving member 22 is fitted and inserted into the small-diameter hole 19b of the connection member 19 so as to be movable up and down.

Further, a lower spring receiving member 18 and the connection member 19 are fixed to the upper opening 12a of the valve main body 12 in this order by screwing, thereby closing the upper opening 12a in the upper portion of the valve chamber. The valve body support portion 17b is passed through a center portion of the lower spring receiving member 18 fixed to the upper portion of the valve chamber 13 so as to be slidable up and down, and a stepped through hole in which the compression coil spring 21 is installed is formed at the center portion of the lower spring receiving member 18. Further, a compression coil spring 21 is disposed between a step portion in the upper portion of the through hole and the upper spring receiving member 22. The compression coil spring 21 is adapted to bias the valve body 17 upward (in a valve opening direction), and it is possible to more securely perform a valve opening motion by applying a biasing force of the coil spring 21 to the valve body 17 in addition to a drive force of the electric motor 45 when operating to open the valve.

The can 33 and the stator 46 are covered with the mold cover 51 which is made of a synthetic resin. Further, a box-like case 52 accommodating a printed board (hereinafter, refer simply to "board") 55 is integrally formed with the mold cover 51 in a side surface (a front side) of the mold cover 51, and a connector 53 provided in an internal portion thereof with an external portion connecting terminal 54 is integrally formed with the case 52 and the mold cover 51 in an upper surface portion of the case 52. The board 55 is accommodated in an internal portion of the case 52, and each of the coil 49 and the magnetic sensor 62 is electrically connected to the external portion connecting terminal 54 via the board 55. It is possible to perform a power feeding to the coil 49 from an external power supply (not shown) and an output of a signal output from the magnetic sensor 62 to the external portion is performed through the external portion connecting terminal 54. A computing apparatus computing an angle of rotation of the rotor 36 and an opening degree of the valve on the basis of an output signal from the magnetic sensor may be mounted to the board 55, in addition to a motor driving circuit which includes a pulse generator and supplies a drive current to the coil 49.

The magnetic shield member 61 is fixed by integrating with the mold cover 51 as an insert part when forming the mold cover 51 (outer molding) (by enclosing with the mold cover 51).

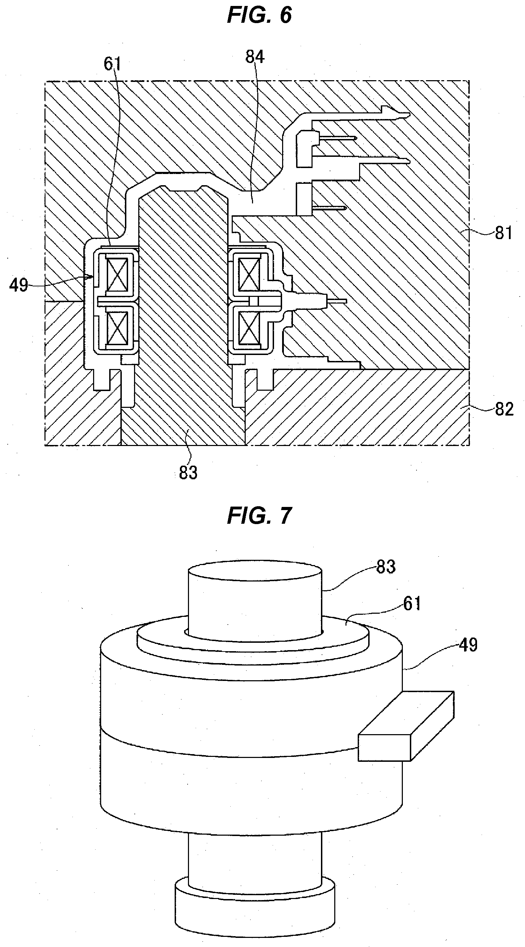

In particular, in order to form the mold cover 51 as shown in Figs. 6 and 7, the coil 49 which is inner molded (in which a winding wire is covered by resin forming) is installed within a metal mold. The metal mold is provided with an upper die 81, a lower die 82 and a core pin (a columnar jig) 83, and a space (a resin flowing space) 84 in which the resin flows and the mold cover 51 is formed is formed between an inner surface of the metal mold and the coil 49. Further, when installing in the metal mold, the coil 49 is arranged in such a manner that the core pin 83 is inserted into a center hole, and the magnetic shield member 61 is arranged in an upper surface of the coil 49 in the same manner that the core pin 83 is inserted into the center hole. A portion in which the core 83 is arranged comes to a space for inserting the can 33 in the later manufacturing step.

Further, by filling the resin flowing space 84 with the resin and solidifying, the magnetic shield member 61 can be integrated with the mold cover 51 and can be fixed so as to be buried in the mold cover 51.

As mentioned above, according to the present embodiment, the magnetic shield member 61 can be embedded only by performing a simple work of arranging the magnetic shield member 61 together with the coil 49 in the metal mold when forming the mold cover 51, and the other step of fixing the magnetic shield member 61 (only for fixing), and a member for fixing are not required. Further, the magnetic shield member 61 is the ring-like member to which the core pin 83 can be fitted and inserted, and is positioned by the core pin 83 together with the coil 49. Thus, any positioning means is not required. Further, owing to the ring shape of the magnetic shield member 61, the magnetic shield member 61 can be embedded only by the simple work of inserting the core pin 83 without paying attention to a position (in particular, a position in a peripheral direction) at which the magnetic sensor 62 is arranged, when the magnetic shield member 61 is arranged in the metal mold. Further, the magnetic shield member 61 is fixed by being enclosed by the molding resin having the fluidity. Therefore, the magnetic shield member 61 can be embedded with no problem even if the shape (for example, a thickness and an outer diameter) of the magnetic shield member 61 is changed.

Further, the magnetic shield member 61 can be fixed at the inner molding time, in place of the outer molding time as mentioned above.

In particular, the inner molding covering the winding wire of the coil 49 with the resin is performed prior to the outer molding. In the inner molding step, the coil 49 (a coil in a state in which the coil is not molded) is arranged within a metal mold for an inner molding including an upper die 91, a lower die 92 and a core pin 93 as shown in Fig. 8. At this time, the magnetic shield member 61 is arranged together with the coil 49 in such a manner as to allow the core pin 93 to pass through a center hole. Further, by filling the resin into a resin flowing space 94 within the metal mold and solidifying, the magnetic shield member 61 can be fixed by an inner mold resin 95 as shown in Fig. 9.

A description will be given of a motion of the electrically operated valve 11 according to the present embodiment as follows.

When the electric current is supplied to the stator 46 (the coil 49) in such a manner that the rotor 36 turns in one direction from the valve-closed state shown in Fig. 1, the rotation of the rotor 36 is converted into a liner motion by the screw feeding mechanism 28, and the screw drive member 26 is pulled upward. As a result, the upper spring receiving member 22 and the valve body 17 (the valve body support portion 17b) are pulled upward, the upper spring receiving member 22 being pressed against a lower surface of the screw drive member 26 via the ball-like joint 23 by the biasing force of the compression coil spring 21, the valve body (the valve body support portion 17b) being connected to the upper spring receiving member 22, and the valve body 17 (the valve body support portion 17b) is separated from the valve seat 14. Thus, the refrigerant flowing into from the inflow passage 15 flows out of the outflow passage 16 through the valve chamber 13 (refer to Fig. 2). A passing quantity of the refrigerant (a flow rate of the refrigerant) in the valve-opened state can be regulated by an amount of rotation of the rotor 36.

On the other hand, when the electric current is supplied to the stator 46 (the coil 49) in such a manner that the rotor 36 rotated in a direction opposite to the one direction from the valve-opened state, the rotation of the rotor 36 is converted into the liner motion by the screw feeding mechanism 28, and the screw drive member 26 moves downward. As a result of the downward movement, the ball-like joint 23, the upper spring receiving member 22 and the valve body 17 move downward, and the valve body 17 (the valve body main body portion 17a) comes into contact with the valve seat 14. Then, a flow passage between the inflow passage 15 and the outflow passage 16 is shut off, thereby coming to the valve-closed state (refer to Fig. 1).

An advantage and a modified example of the present embodiment will be mentioned as follows (same applies to a second embodiment mentioned later).

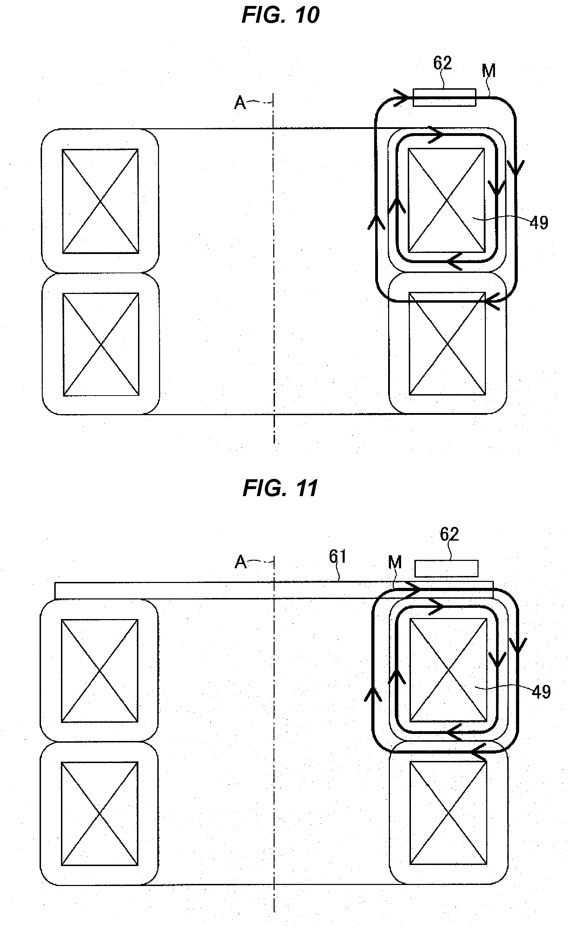

As shown in Fig. 10, in a conventional structure which is not provided with the magnetic shield member, when a magnetic flux leakage is generated from the coil 49, a leakage magnetic flux M tends to reach the magnetic sensor 62 which is arranged in an upper surface portion of the coil 49. In contrast, the electrically operated valve 11 according to the present embodiment is provided with the magnetic shield member 61 so as to be interposed between the magnetic sensor 62 and the coil 49 as shown in Fig. 11. Therefore, the leakage magnetic flux M passes through the magnetic shield member 61, and is hard to reach the magnetic sensor 62. As a result, it is possible to prevent an erroneous detection from being generated in the magnetic sensor 62 by the leakage magnetic flux M.

Further, in the electrically operated valve 11 according to the present embodiment, an upper surface of the stator 46 is entirely covered with the magnetic shield member 61 as seen from the magnetic sensor 62. Therefore, it is possible to more securely shut off the leakage magnetic flux from the coil 49, and it is possible to more securely protect the magnetic sensor 62 from the leakage magnetic flux.

Further, owing to the provision of the magnetic shield member 61, the magnetic sensor 62 is hard to be affected by the leakage magnetic flux of the coil 49 even by arranging the magnetic sensor 62 closer to the stator 46. Therefore, there is also an advantage that it is possible to make the magnetic rotor 36 short (reduce the dimension in a vertical direction), it is possible to reduce a manufacturing cost of the electrically operated valve 11, and it is possible to make the electrically operated valve 11 low in profile (compact in a vertical direction).

The magnetic shield member 61 is not necessarily fixed to the upper surface of the stator 46, but may be arranged away from the upper surface of the stator 46 as shown in Fig. 8.

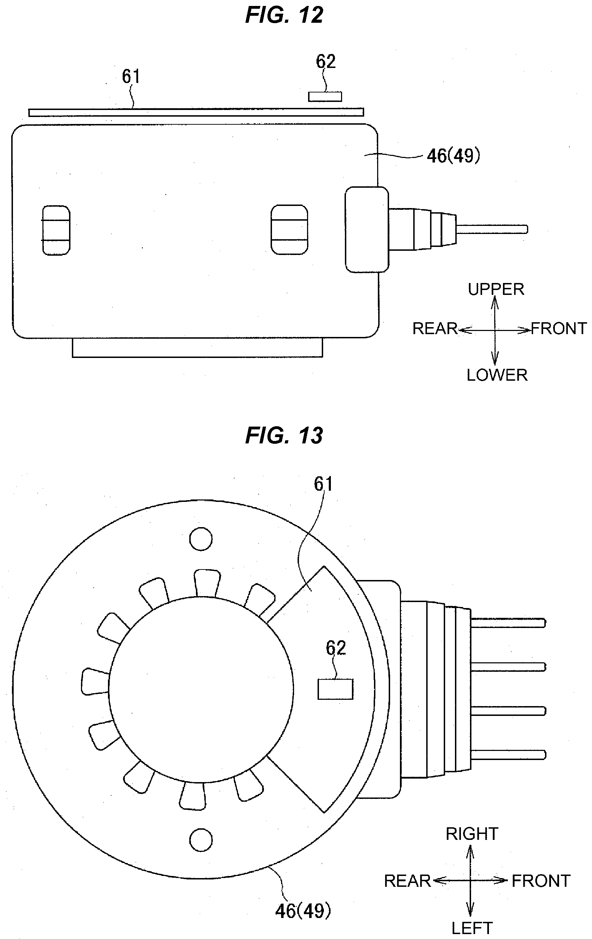

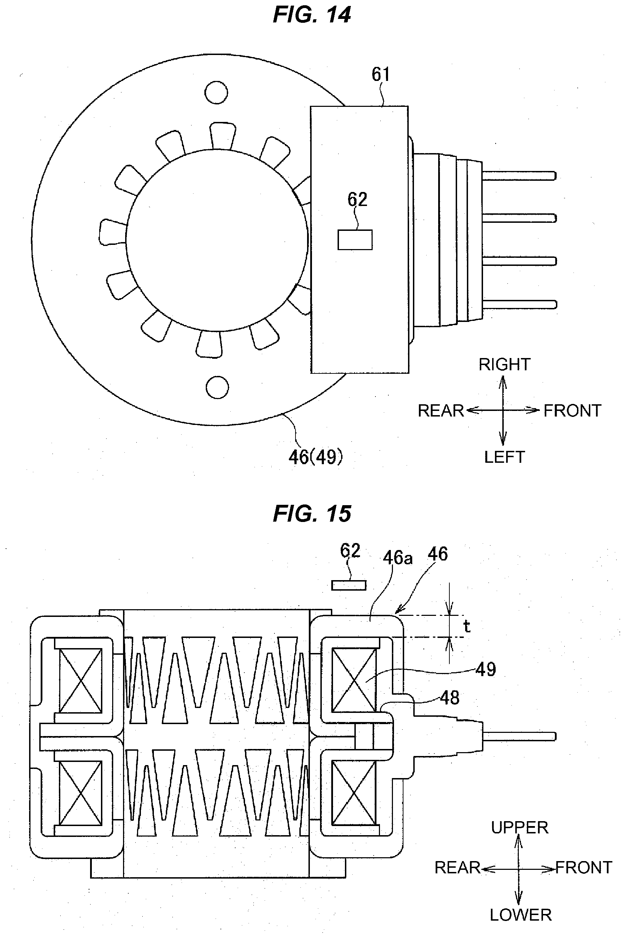

Further, the magnetic shield member 61 may have a fan-like planar shape as shown in Fig. 13, a rectangular planar shape as shown in Fig. 14, or the other shapes.

Further, the object of the present invention can be similarly achieved with no provision of the magnetic shield member 61, or by making a thickness t of a top plate portion 46a (a stator yoke or a stator cover made of a magnetic material) of the stator 46 interposed between the magnetic sensor 62 and the coil 49 as shown in Fig. 15 with the provision of the magnetic shield member 61 (in combination with the magnetic shield member 61).

### [Second Embodiment]

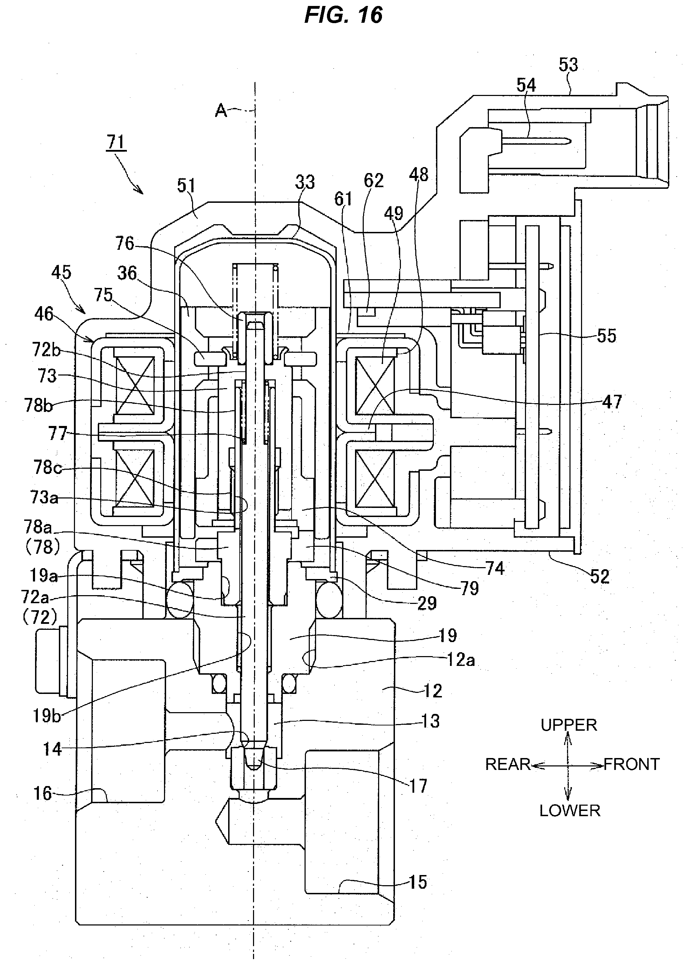

A description will be given of an electrically operated valve according to a second embodiment of the present invention with reference to Figs. 16 to 17.

As shown in Figs. 16 to 17, an electrically operated valve 71 according to the present embodiment is adapted to regulate a flow rate of a refrigerant by moving a valve body 17 up and down by means of an electric motor (a stepping motor) 45 in the same manner as the electrically operated valve 11 according to the first embodiment, and is provided in an upper surface portion of a coil 49 with a magnetic sensor 62 which detects a change of a magnetic flux caused by a rotation of a magnet rotor 36 included in the electric motor 45. However, as is different from the electrically operated valve 11 according to the first embodiment, the electrically operated valve 71 has a structure in which a valve stem 72 including a valve body 17 in a lower end and the magnet rotor 36 integrally move up and down, thereby opening and closing a valve. A description will be given below mainly of different points by attaching the same reference numerals to the same structure as those of the electrically operated valve 11 according to the first embodiment and omitting an overlapping description.

As shown in Figs. 16 to 17, the electrically operated valve 71 according to the present embodiment is provided with a rod-like valve stem 72 which extends in a vertical direction from an internal portion of the magnet rotor 36 to the valve chamber 13 along a central axis line A of the electrically operated valve 71. The valve stem 72 has a barrel portion 72a which has a columnar shape, and an upper small-diameter portion 72b which is coaxially formed in an upper end portion of the barrel portion 72a in succession to the barrel portion 72a and has a small outer diameter, and the valve body 17 is integrally provided in a lower end of the valve stem 72. Further, the magnet rotor 36 is disposed in an inner side of the can 33 so as to be rotatably and slidable in a vertical direction, in the present embodiment.

A valve stem holder 73 is disposed in an inner side of the magnet rotor 36. The valve stem holder 73 has a cylindrical shape which is closed in an upper end, and a support ring 75 is fixed to an upper end portion of the valve stem holder 73 by caulking. The rotor 36 and the valve stem holder 73 are integrally connected via the support ring 75. A female screw portion 73a is formed on an inner peripheral surface of the valve stem holder 73.

The upper small-diameter portion 72b of the valve stem 72 passes through the valve stem holder 73, and a push nut 74 for retaining is attached to an upper end portion of the upper small-diameter portion 72b. The valve stem 72 is biased downward by a compression coil spring 77 which is disposed between the valve stem holder 73, and a step portion between the barrel portion 72a and the upper small-diameter portion 72b in the valve stem 72. Therefore, the valve stem 72 is regulated its relative movement in the vertical direction to the valve stem holder 73 by the push nut 76 and the compression coil spring 77, and moves upward and downward together with the valve stem holder 73.

The connection member 19 placed in the upper surface portion of the valve main body 12 has a large-diameter hole 19a and a small-diameter hole 19b similar to the first embodiment. However, according to the present embodiment a guide bush 78 is fitted and inserted into the large-diameter hole 19a in place of the bearing member. The guide bush 78 has a large-diameter cylindrical portion 78a which has a large outer diameter, and a small-diameter cylindrical portion 78b which is coaxially formed in an upper end portion of the large-diameter cylindrical portion 78a in succession to the large-diameter cylindrical portion 78a and has a small outer diameter. A male screw portion 78c threadably engaged with the female screw portion 73a of the valve stem holder 73 is formed on an outer peripheral surface of the small-diameter cylindrical portion 78b. The guide bush 78 is connected to the connection member 19 by pressing the large-diameter cylindrical portion 78a to an inner side of the connection member 19. Further, the barrel portion 72a of the valve stem 72 passes through the small-diameter hole 19b of the connection member 19.

Further, an upper stopper body 74 is disposed in the valve stem holder 73, and a lower stopper body 79 is disposed in the large-diameter cylindrical portion 78a of the guide bush 78. The stopper bodies 74 and 79 are provided for determining a lower limit position of the valve stem holder 73, and when the valve stem holder 73 moves down by rotating to reach the lower limit position, the upper stopper body 74 comes into contact with the lower stopper body 79 and further rotation of the valve stem holder 73 is regulated.

A description will be given below of a motion of the electrically operated valve 71 according to the present embodiment.

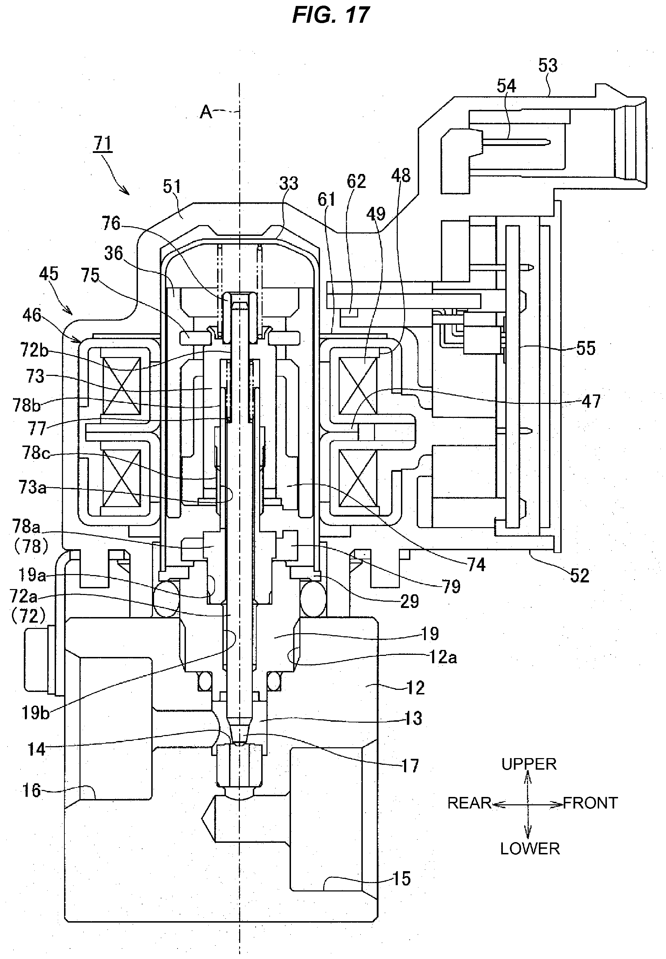

When an electric current is supplied to the stator 46 (the coil 49) in such a manner that the rotor 36 turns in one direction from the valve-closed state shown in Fig. 16, the valve stem holder 73 connected to the rotor 36 turns together with the rotor 36. Since the female screw portion 73a threadably engaged on the male screw portion 78c formed on the outer peripheral surface of the small-diameter cylindrical portion 78b of the guide bush 78 is formed on the inner peripheral surface of the valve stem holder 73, the rotation of the rotor 36 (the valve stem holder 73) is converted into the liner motion in the vertical direction on the basis of an interaction of the male screw portion 78c and the female screw portion 73a, and the valve stem holder 73 moves upward. As a result, the rotor 36 connected to the valve stem holder 73, and the valve stem 72 regulated its relative movement to the valve stem holder 73 also move upward together with the valve stem holder 73. The valve body 17 disposed in the lower end of the valve stem 72 is away from the valve seat 14 accompanied with the upward movement of the valve stem 72, so that the refrigerant flowing into from the inflow passage 15 is going to flow out of the outflow passage 16 through the valve chamber 13 (refer to Fig. 17). A passing quantity of the refrigerant (a flow rate of the refrigerant) can be adjusted on the basis of an amount of rotation of the rotor 36.

On the contrary, when the electric current is supplied to the stator 46 (the coil 49) in such a manner that the rotor 36 turns in a direction opposite to the one direction from the valve-opened state, the rotation of the rotor 36 (the valve stem holder 73) is converted into the linear motion in the vertical direction on the basis of the interaction of the female screw portion 73a and the male screw portion 78c. As a result, the valve stem holder 73 moves downward together with the rotor 36 and the valve stem 72. Thus, the valve body 17 moves downward toward the valve seat 14, and a flow passage between the inflow passage 15 and the outflow passage 16 is shut off when the valve body 17 comes into contact with the valve seat 14, thereby coming to the valve-closed state (refer to Fig. 16).

In the electrically operated valve 71 according to the present embodiment, the rotor 36 moves in the axial direction accompanied with the valve opening and closing motion as mentioned above. However, the upper end of the rotor 36 protrudes outward to the upper side of from the upper surface of the stator 46 (in the axial direction), and the protruding portion of the rotor 36 and the magnetic sensor 62 face to each other in the radial direction in any state between a fully-closed state (refer to Fig. 16) in which the valve is completely closed and a fully-opened state (refer to Fig. 17) in which the valve is opened to the maximum. This is because the magnetic force of the rotor 36 is securely detected by the magnetic sensor 62. Further, the electrically operated valve 71 according to the present embodiment is also provided with the same magnetic shield member 61 similar to the first embodiment, and can obtain the same operations and effects.

The description is given above of the embodiments according to the present invention. However, it is apparent for a person skilled in the art that the present invention is not limited to them, and can be variously changed within the scope of claims.

For example, the transmission mechanism transmitting the drive force from the electric motor 45 to the valve body 17 is not limited to each of the embodiments, but may have various configurations which are different from each of the embodiments. Further, in each of the embodiments, the case 52 accommodating the board 55 is disposed in the side surface of the stator 46. However, the case 52 may be disposed, for example, in the upper surface portion of the stator 46, and the board 55 may be arranged in the upper surface portion of the stator 46.

### REFERENCE SIGNS LIST

A central axis line
M magnetic flux
11, 71 electrically operated valve
12 valve main body
12a upper opening
13 valve chamber
14 valve seat
15 inflow passage
16 outflow passage
17 valve body
17a valve body main body portion
17b valve body support portion
18 lower spring receiving member
19 connection member
19a large-diameter hole
19b small-diameter hole
21 compression coil spring
22 upper spring receiving member
22a upper surface fitting hole
22b lower surface fitting hole
23 ball-like joint
24 ball
25 ball receiving seat
26 screw drive member
26a plate-like portion
26b male screw portion
27 bearing member
27a insertion hole
27b female screw portion
28 screw feeding mechanism
29 base plate
31 output shaft
31a fitting groove
32 cylindrical member
33 can
34 shaft
25 support member
36 magnet rotor
36a rotor member
37 sun gear member
37a sun gear
38 planetary gear
39 shaft
40 internal tooth gear
41 carrier
42 output gear
43 speed reduction mechanism (paradox planetary gear speed reduction mechanism)
44 ring gear (internal fixed gear)
45 stepping motor (electric motor)
46 stator
46a top plate portion of stator
47 yoke
48 bobbin
49 coil
51 mold cover
52 case
53 connector
54 external portion connecting terminal
55 board
61 magnetic shield member
62 magnetic sensor
72 valve stem
72a barrel portion
72b upper small-diameter portion
73 valve stem holder
73a female screw portion
74 upper stopper body
75 support ring
76 push nut
77 compression coil spring
78 guide bush
78a large-diameter cylindrical portion
78b small-diameter cylindrical portion
78c male screw portion
79 lower stopper body
81, 91 upper die
82, 92 lower die
83, 93 core pin
84, 94 resin flowing space
95 inner mold resin

## Claims

1. An electrically operated valve comprising:
a vale main body having a valve chamber which is communicated with an inflow passage introducing a refrigerant and an outflow passage discharging the refrigerant;
a valve body changing a flow rate of the refrigerant by advancing and retreating with respect to a valve seat between a valve-closed state in which the valve body is seated on the valve seat and a valve-opened state in which the valve body is spaced apart from the valve seat; and
an electric motor which drives the valve body,
wherein the electric motor has a stator which includes a coil generating a magnetic force due to an electric current application, and a magnetic rotor which is arranged in an inner side of the stator and rotates due to the magnetic force generated by the coil, and
wherein the electrically operated valve further comprises a magnetic sensor which detects the magnetic force of the magnet rotor,
**characterized in that** a magnetic shield member is disposed in such a manner as to be interposed between the magnetic sensor and the coil.

2. The electrically operated valve according to claim 1, wherein the magnetic shield member is made of a soft magnetic material.

3. The electrically operated valve according to claim 1 or 2, wherein the magnetic rotor is arranged so as to pass through the stator, and is provided with a protruding portion which protrudes outward from at least one end surface among both end surfaces of the stator in an axial direction, and
wherein the magnetic sensor is arranged so as to be spaced at a fixed distance from one end surface of the stator and face to the protruding portion in a radial direction of the magnet rotor.

4. The electrically operated valve according to claim 3, wherein the stator has a ring-like planar shape having a center hole which allows the magnetic rotor to pass through, and
wherein the magnetic shield member is a flat plate member which covers an upper end surface of the stator and has a ring-like planar shape, the upper end surface being the one end surface of the stator.

5. The electrically operated valve according to claim 4, further comprising a resin forming portion which covers the coil,
wherein the magnetic shield member is fixed by the resin forming portion.
